# EUROPÄISCHE PATENTSCHRIFT

(11) **EP 1 282 657 B1**
(45) Veröffentlichungstag und Bekanntmachung des Hinweises auf die Patenterteilung: **29.12.2004**
(21) Anmeldenummer: 01933631.2
(22) Anmeldetag: 27.04.2001
(51) Int. Cl.: C08J 5/22, B01D 71/00, H01M 8/10, H01M 10/40, C25B 9/00, C08G 83/00, H01B 1/12

(54) **POLYMERE MEMBRANEN**
POLYMER MEMBRANES
MEMBRANES POLYMERES

(30) Priorität: 02.05.2000 DE 10021106
(43) Veröffentlichungstag der Anmeldung: 12.02.2003
(73) Patentinhaber: Häring, Rima, 70619 Stuttgart (DE)
(72) Erfinder: KERRES, Jochen, 73760 Ostfildern (DE)
(86) Internationale Anmeldenummer: PCT/DE2001/001624
(87) Internationale Veröffentlichungsnummer: WO 2001/084657

(56) Entgegenhaltungen:
- EP-A- 0 191 209
- DE-A- 19 943 244
- BONNET B ET AL: "HYBRID ORGANIC-INORGANIC MEMBRANES FOR A MEDIUM TEMPERATURE FUEL CELL" JOURNAL OF NEW MATERIALS FOR ELECTROCHEMICAL SYSTEMS, SN, MONTREAL, CA, Bd. 3, Nr. 2, 2000, Seiten 87-92, XP000997606 ISSN: 1480-2422
- KENNETH A. MAURITZ: "organic-inorganic hybrid materials : perfluorinated ionomers as sol-gel polymerization templates for inorganic alkoxides" MATERIALS SCIENCE AND ENGINEERING C, Bd. 6, 1998, Seiten 121-133, XP002183238 in der Anmeldung erwähnt
- L. DEPRE AND ALL: "Organic-inorganic hybrid protonic polymeric electrolytes grafted by sulfonic acid /sulfonamide moieties" MATERIALS RESEARCH SOCIETY SYMPOSIUM PROCEEDINGS, Bd. 575, 5. April 1999 (1999-04-05), Seite 253-258 XP001039983
- P.STAITI AND AL: "Preparation and proton conductivity of composite membranes of Nafion 1100 and titanium sulfopheniylphosphonate" NEW MATERIALS FOR ELECTROCHEMICAL SYSTEMS III, EXTENDED ABSTRACTS OF THE THIRD INTERNATIONAL SYMPOSIUM ON NEW MATERIALS FOR ELECTROCHEMICAL SYSTEMS, 4. - 8. Juli 1999, Seite 224 XP002183239
- NUNES S P ET AL: "Membranes of poly(ether imide) and nanodispersed silica" JOURNAL OF MEMBRANE SCIENCE, ELSEVIER SCIENCE, AMSTERDAM, NL, Bd. 157, Nr. 2, 7. Mai 1999 (1999-05-07), Seiten 219-226, XP004222947 ISSN: 0376-7388 in der Anmeldung erwähnt

## Beschreibung

Die Erfindung betrifft neue organisch/anorganische-Hybrid-Membranen, die zusammengesetzt sind aus:
- einer polymeren Säure mit -SO₃H-, -PO₃H₂-, -COOH- oder B(OH)₂-Gruppen
- einer polymeren Base, die primäre, sekundäre oder tertiäre Aminogruppen, Pyridingruppen, Imidazol-, Benzimidazol-, Triazol-, Benzotriazol-Pyrazol- oder Benzpyrazolgruppen entweder in der Seitenkette oder in der Hauptkette enthält.
- (optional) einer weiteren polymeren Base mit den o. g. basischen Gruppen
- einem Element- oder Metall-oxid- oder -Hydroxid, das erhalten wurde durch die Hydrolyse und/oder Sol-Gel-Reaktion einer element- und/oder metallorganischen Verbindung während des Membranbildungsprozesses und/oder durch eine Nachbehandlung der Membran in wässrigen sauren, alkalischen oder neutralen Elektrolyten.

Gegenstand dieser Erfindung sind außerdem Verfahren zur Herstellung dieser Membranen und verschiedene Anwendungsmöglichkeiten dieser Membranen.

Der Stand der Technik bei Ionomer/anorganischen Hybrid-Composites ist in dem Review von Mauritz dargelegt, der einer der Pioniere der Implementierung der Sol/Gel-Technik in Organopolymere, und insbesondere in Ionomere wie Nafion® ist(Organic-inorganic hybrid materials: perfluorinated ionomers as sol-gel polymerization templates for inorganic alkoxides K. A. Mauritz Mat. Sci. Eng. C 6 (1998) 121-133). Kern des Verfahrens ist die Hydrolyse einer element- oder metallorganischen Verbindung in der Matrix eines ionisch funktionalisierten Organopolymers zu einem Element- oder Metalloxid- oder - Hydroxidnetzwerk.

Weitere Beispiele für in der Literatur beschriebene Systeme sind:
(a) Nafion® wird in Wasser und Alkohol vorgequollen und dann in Tetraethoxysilan(TEOS)/Alkohol-Lösungen eingelegt. In den Sulfonsäure-Clustern der Nafion-Membran findet dann die durch die Sulfonsäure-Protonen katalysierte Sol-Gel-Reaktion des TEOS zu wasserhaltigen SiO₂/OH-Netzwerken statt ("Nanocomposite") (Microstructural evolution of a Silicon Oxide Phase in a Perfluorosulfonic Acid ionomer by an In Situ Sol-Gel Reaction, K. A. Mauritz, I. D. Stefanithis, S. V. Davis, et al. J. Appl. Polym. Sci. 55, 181-190 (1995).
(b) Nafion® wird in Wasser und Alkohol vorgequollen und dann in Zr(OBu)₄-Alkohol-Lösungen eingelegt. In den Sulfonsäure-Clustern der Nafion-Membran findet dann die durch die Sulfonsäure-Protonen katalysierte Sol-Gel-Hydrolysereaktion des Zr(OBu)₄ zu wasserhaltigen ZrO₂-Netzwerken statt ("Nanocomposite") Asymmetric Nafion/(Zirconium Oxide) Hybrid Membranes via In Situ Sol-Gel Chemistry, W. Apichatachutapan, R. B. Moore, K. A. Mauritz, J. Appl. Polym. Sci. 62, 417-426 (1996).
(c) Nafion-Sulfonylfluorid-Precursormembranen werden in Perfluorohydrophenanthren vorgequollen und in 3-Aminopropyltriethoxysilan eingelegt. Danach wird überschüssiges . Silan mit EtOH ausgewaschen. Es entstehen Hybride, bei denen durch Hydrolyse des Silans und durch Reaktion des Silans mit den SO₂F-Gruppen partiell mit dem Polymer vernetzte SiO₂-Netzwerke in der Membranmatrix entstehen (Chemical modification of a nafion sulfonyl fluoride percursor via in situ sol-gel reactions, A. J. Greso, R. B. Moore, K. M. Cable, W. L. Jarrett, K. A. Mauritz, Polymer 38, 1345-1356 (1997).
(d) Surlyn®-Ionomermembranen in der Zn²⁺-Form werden in 1-Propanol gequollen und danach in H₂O/TEOS-Mischungen eingelegt. In der Membranmatrix findet dann die durch die Sulfonsäure-Protonen katalysierte Sol-Gel-Hydrolysereaktion des TEOS zu wasserhaltigen SiO₂/OH-Netzwerken statt ("Nanocomposite") (Surlyn®/[Silicon Oxide] Hybrid Materials. 2. Physical Properties Characterization, D. A. Siuzdak, K. A. Mauritz, J. Polym. Sci. Part B: Polymer Physics, 37, 143-154 (1999).
   Nachteil der bekannten Systeme (a) bis (d) ist, das die Sol-Gel-Reaktion in einer vorgeformten Membran stattfindet und mithin der Gehalt des Polymer-Composits an durch die Hydrolyse erzeugter anorganischer Polymerphase nicht nach Wunsch eingestellt werden kann.
   Auch Hybrid-Systeme aus nichtionischen Polymeren und Metall-bzw. Elementoxiden wurden in der Literatur beschrieben:
(e) Composites aus Poly(n-Butylmethacrylat) und Titanoxid, hergestellt durch Wasserdampf-Hydrolyse von Titanalkoxiden, die in alkoholischen Lösungen einer Poly(n-Butylmethacrylat)-Polymerlösung hinzugefügt worden waren, in der Polymermatrix nach Abdampfung des Lösungsmittels. (Novel Poly(n-Butyl Methacrylate)/Titanium Oxide Alloys Produced by the Sol-Gel process for Titanium Alkoxides, K. A. Mauritz, C. K. Jones, J. Appl. Polym. Sci. 40, 1401-1420 (1990)).
(f) Compositmembranen aus Polyetherimid und nano-dispergiertem Siliciumoxid, hergestellt durch Hydrolyse von TEOS in Lösungen von Polyetherimid Ultem® in NMP durch Addition von 0.15 M HCl-Lösung. nach Hydrolyse wurden dichte oder Phaseninversionsmembranen aus dieser Polymerlösung hergestellt. Kompatibilisierung der anorganisachen mit der organischen Phase konnte erzielt werden durch zusätzliche Addition von 3-Aminopropyltrimethoxysilan (AS) (Membranes of poly(ether imide) and nanodispersed silica, S. P. Nunes, K. V. Peinemann, K, Ohlrogge, A. Alpers, M. Keller, A. T. N. Pires, J. Memb. Sci. 157 (1999) 219-226)

Diese Systeme weisen ähnliche Nachteile auf wie bereits vorher beschrieben.

Wie die Ausführungen zeigen, gibtes bereits eine Reihe von rein organischen und auch mit anorganischen Zusätzen versehene protonenleitenden Membranen, allerdings weisen alle diese Systeme und Membranen mangelnde thermische und mechanische Stabilität auf, die besonders in Bereichen oberhalb einer Temperatur von 100°C zum Tragen kommt.

Somit ist es Aufgabe der Erfindung, neue Composites und Compositemembranen aus Mischungen von Kationenaustauscherpolymeren und basischen Polymeren bereitzustellen, die zusätzlich eine anorganische Element/Metall-Oxid/Hydroxid-Phase enthalten, welche folgende Membraneigenschaften verbessert:
- mechanische Stabilität
- thermische Stabilität
- verbesserte Wasserhaltefähigkeit auch bei Temperaturen von über 100°C, was insbesondere für die Anwendung in Membranbrennstoffzellen im Temperaturbereich von > 100°C wichtig ist.

Diese Aufgabe wird durch die Bereitstellung von Membranen gemäß Anspruch 1 gelöst.

Weiterhin trägt das erfindungsgemäße Verfahren zur Lösung dieser Aufgabe bei.

Hierbei werden organische Vorstufen der Element/Metall-Oxid/Hydroxide in die Polymerlösung eingebracht (Alkoxide/Ester, Acetylacetonate).
Die Ausbildung der anorganischen Phase im Ionomer erfolgt nach der Membranbildung durch Hydrolyse in saurem, basischem und/oder neutralem wässrigem Milieu.

Es wurde überraschend festgestellt, daß, wenn man Ti-diacetylacetonat-diisopropylat/Isopropanol in Lösungen der Salzform von sulfoniertem Poly(etheretherketon) sPEEK und einem basischen Polymer (z. B. Polybenzimidazol PBI Celazol®) in NMP oder DMAc einbringt, das Ti-diacetylacetonat-diisopropylat nicht in der Polymerlösung hydrolysiert, sondern bei der Abdampfung des Lösungsmittels in die Membranmatrix eingebaut wird. Es wurde überraschend festgestellt, daß man die organische Ti-Verbindung durch sukzessive Nachbehandlung der Membran in wässriger Lauge und/oder Wasser und/oder Säure zu nanodispers in der Membranmatrix verteiltem Titanoxid mittels Sol/Gel-Reaktion hydrolysieren kann. Das Titanoxid kann durch EDX in der Membranmatrix nachgewiesen werden.
Dabei wurden Gehalte an TiO₂ in der Membranmatrix von bis zu 35 Gew% erreicht.

Die erfindungsgemäße Composites bestehen aus:
- einer polymeren Säure mit -SO₃H-, -PO₃H₂-, -COOH- oder B(OH)₂-Gruppen, vorzugsweise mit einem Arylhauptkettenpolymer-Rückgrat
- einer oder zweier polymeren Basen, die primäre, sekundäre oder tertiäre Aminogruppen, Pyridingruppen, Imidazol-, Benzimidazol-, Triazol-, Benzotriazol-Pyrazol- oder Benzpyrazolgruppen entweder in der Seitenkette oder in der Hauptkette enthält.
- einem Element- oder Metall-oxid- oder -Hydroxid, das erhalten wurde durch die Hydrolyse folgender Klassen von element- und/oder metallorganischen Verbindungen:
   - Metall/Element-Alkoxide/Ester von Ti, Zr, Sn, Si, B, Al
   - Metallacetylacetonate, z. B. Ti(acac)₄, Zr(acac)₄
   - Mischverbindungen aus Metall/Element-Alkoxiden und Metallacetylacetonaten, z. B. Ti(acac)₂(OiPr)₂
   - organischen Aminoverbindungen von Ti, Zr, Sn, Si, B, Al
und sind während des Membranbildungsprozesses und/oder durch eine Nachbehandlung der Membran in wässrigen sauren, alkalischen oder neutralen Elektrolyten herstellbar.

Durch die nanodispers in der Membranmatrix verteilte, erfindungsgemäß eingebrachte anorganische Phase wird das Eigenschaftsprofil der erfindungsgemäßen Ionomer(blend)membranen nachhaltig verbessert.

Die erfindungsgemäßen neuen Anorganisch/Organisch-Hybrid-Säure-Base-Blendmembranen weisen ein hervorragendes Eigenschaftsprofil auf:
- gute Protonenleitfähigkeit
- hervorragende thermische Stabilität.
- hervorragende mechanische Stabilität.
- limitierte Quellung.

Insbesondere wird die Wasserhaltefähigkeiten der Membran insbesondere bei T>100°C stark verbessert. Dieses wird durch das anorganische Oxid/Hydroxid erreicht, das in nanodisperser Verteilung der anorganischen Komponente in der Membran vorliegt. Durch Einmischung von Oxidpulvern in Ionomermembranen, wie bereits in einigen Publikationen vorgeschlagen wurde (Comparison of Ethanol and Methanol Oxidation in a Liquid-Feed Solid Polymer Electrolyte Fuel Cell at High Temperature A. S. Arico, P. Creti, P. L. Antonucci, V. Antonucci, Electrochem. Sol. St. Lett. 182) 66-68 (1998)), läßt sich keine so feine Verteilung der anorganischen Komponente in der Membranmatrix erreichen wie beim erfindungsgemäßen Verfahren, bei dem die element/metallorganischen Verbindungen erst in der Membranmatrix zum Oxid hydrolysiert werden. Dadurch weisen die erfindungsgemäßen Membranen noch weitere Vorteile auf:
- erniedrigte Methanolpermeabilität
- Beitrag zur Protonenleitung, insbesondere bei T>100°C

Im folgenden soll die Erfindung durch einige Bespiele näher erläutert werden.

### Herstellung der Ionomerblendmembran TJ-3

2 g sulfoniertes Poly(etheretherketon Victrex® (Ionenaustauscherkapazität 1,364 meq SO₃H/g) werden in 10 g N-Methylpyrrolidinon gelöst. Man fügt danach 1 g Triethylamin zur Lösung hinzu, um die Sulfonsäuregruppen des sPEEK zu neutralisieren. Danach fügt man zur Lösung 77 mg Poly(4-vinylpyridin) hinzu. Nach Auflösung addiert man zur Lösung 5,1 g Titan(IV)-bis-(acetylacetonato)-diisopropylat, 75 Gew%ige Lösung in Isopropanol. Danach wird der Polymerlösungsfilm entgast und dann mit einer Rakel auf einer Glasplatte zu einem 800 µm dicken Film ausgezogen. In einem Membrantrockner wird das Lösungsmittel bei 100°C abgezogen. Nach der Filmtrocknung wird die Glasplatte mit dem Polymerfilm in eine Wanne mit H₂O eingelegt. Der Film löst sich von der Glasplatte ab. Der Film wird 24 h bei 70°C in IN NaOH nachbehandelt, und dann 24 h bei 70°C in vollentsalztem Wasser. Danach wird der Film bei Raumtemperatur in vollentsalztem Wasser gelagert. Für die Bestimmung der Protonenleitfähigkeit wird der Film in 0,5 N H₂SO₄ 24 h bei Raumtemperatur äquilibriert.

| *Charakerisierungsergebnisse:* | |
|---|---|
| Filmdicke [µm] | 100 |
| IEC [meq SO₃H/g] | 1,15 |
| Quellung [%] | 104 |
| Permselektivität (0,5 N/ 0,1 N NaCl) [%] | 78,35 |
| Rₛₚ^{H+} (0,5 N HCl) [Ω cm] | 6,4 |
| Rₛₚ^{H+} (H₂O) [Ω cm] | 16,9 |
| Rₛₚ^{Na+} (0,5 N NaCl) [Ω cm] | 29,6 |

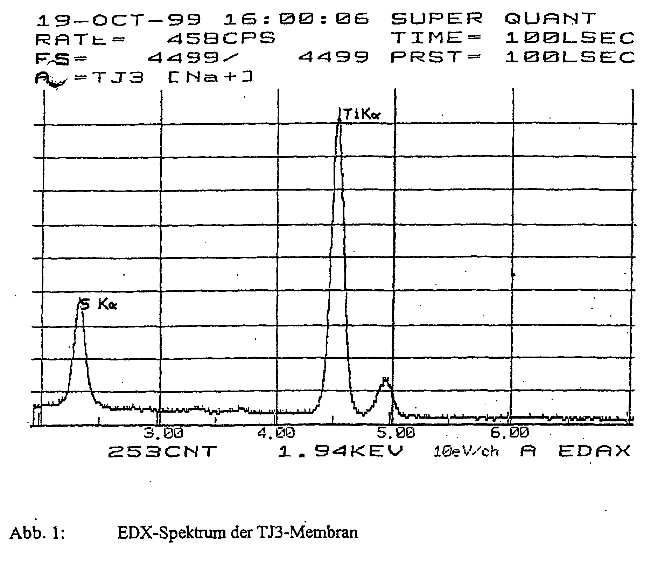

In Abb. 1 ist das EDX-Spektrum der TJ3-Membran gezeigt. Das Ti-Signal ist deutlich sichtbar.

### Herstellung der Ionomerblendmembran JOA-2

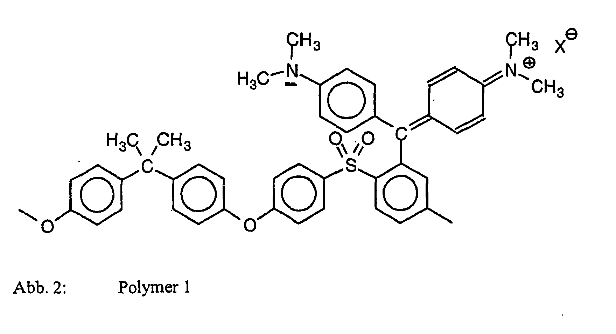

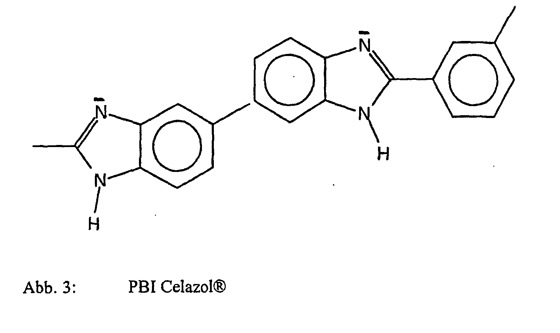

3 g sulfoniertes Poly(etheretherketon Victrex® (Ionenaustauscherkapazität 1,75 meq SO₃H/g) werden in 15 g N-Methylpyrrolidinon gelöst. Man fügt danach 0,5 g n-Propylamin zur Lösung hinzu, um die Sulfonsäuregruppen des sPEEK zu neutralisieren. Danach fügt man zur Lösung 0,15 g Polymer 1 (Abb. 2) hinzu. Danach fügt man zur Lösung 1,4 g 10,72 Gew%ige PBI Celazol® (Abb. 3)-Lösung hinzu. Danach addiert man zur Lösung 4,036 g Titan(IV)-bis-(acetylacetonato)-diisopropylat, 75 Gew%ige Lösung in Isopropanol. Danach wird der Polymerlösungsfilm entgast und dann mit einer Rakel auf einer Glasplatte zu einem 800 µm dicken Film ausgezogen. In einem Vakummtrockenschrank werden die Lösungsmittel zuerst 1 h bei 75°C und 800 mbar und danach bei 120°C und zuerst 800, dann bis zu 50 mbar Druck abgezogen. Nach der Filmtrocknung wird die Glasplatte mit dem Polymerfilm in eine Wanne mit H₂O eingelegt. Der Film löst sich von der Glasplatte ab. Der Film wird 24 h bei 70°C in IN NaOH nachbehandelt, und dann 24 h bei 70°C in vollentsalztem Wasser. Danach wird der Film bei Raumtemperatur in vollentsalztem Wasser gelagert. Für die Bestimmung der Protonenleitfähigkeit wird der Film in 0,5 N H₂SO₄ 24 h bei Raumtemperatur äquilibriert.

| *Charakerisierungsergebnisse:* | |
|---|---|
| Filmdicke [µm] | 100 |
| IEC [meq SO₃H/g] | 0,97 |
| Quellung [%] | 27,7 |
| Permselektivität [%] | 94,9 |
| Rₛₚ^{H+} (0,5 N H₂SO₄) [Ω cm] | 21,8 |
| Rₛₚ^{H+} (H₂O) [Ω cm] | 55,6 |
| Rₛₚ^{Na+} (0,5 N NaCl) [Ω cm] | 79 |

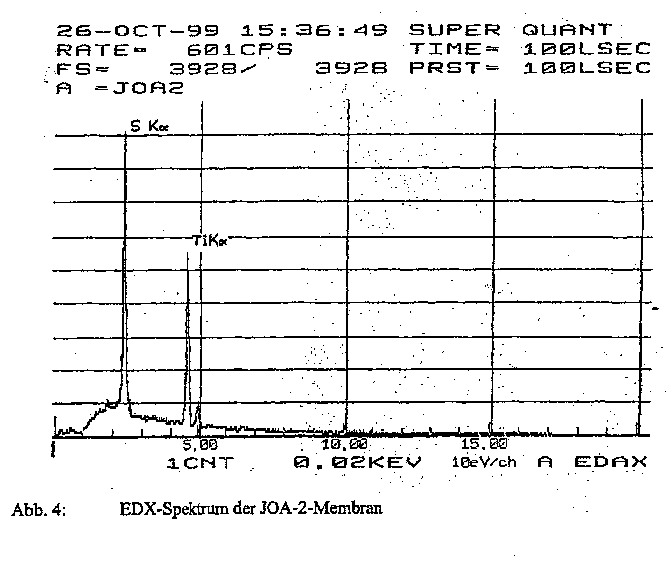

In Abb. 4 ist das EDX-Spektrum der JOA-2-Membran gezeigt. Das Ti-Signal ist deutlich sichtbar.

## Patentansprüche

1. Komposite und Kompositmembranen, umfassend (A) wenigstens eine polymere Säure, (B) eine oder mehrere polymere Basen und (C1) wenigstens nanodispers verteiltes Elementund/oder Metall-oxid und/oder Metall-Hydroxid.

2. Komposite und Kompositmembranen, umfassend (A) wenigstens eine polymere Säure, (B) eine oder mehrere polymere Basen und (C2) wenigstens nanodispers verteiltes Elementund/oder Metall-phosphat und/oder -hydrogenphosphat und/oder -dihydrogenphosphat

3. Komposite und Kompositmembranen nach Anspruch 1 und 2 **dadurch gekennzeichnet, daß** die polymere Säure ein Arylhauptkettenpolymer ist und -SO₃H, -PO₃H₂, -COOH oder -B(OH)₂ oder deren Salze als saure Gruppen aufweist und ausgewählt ist aus der Gruppe der Polyethersulfone, Polysulfone, Polyphenylsulfone, Polyetherethersulfone, Polyetherketone, Polyetheretherketone, Polyphenylenether, Polydiphenylphenylenether, Polyphenylensulfide oder ein Copolymer ist, das mindestens eine dieser Komponenten enthält.

4. Komposite und Kompositmembranen nach Anspruch 1 und 2 **dadurch gekennzeichnet, daß** die polymeren Basen primäre, sekundäre oder tertiäre Aminogruppen, Pyridingruppen, Imidazol-, Benzimidazol-, Triazol-, Benzotriazol-, Pyrazol- oder Benzpyrazolgruppen entweder in der Seitenkette oder in der Hauptkette enthalten.

5. Komposite und Kompositmembranen nach einem oder mehreren der Ansprüche 1-4, **dadurch gekennzeichnet, daß** sie ein Salz, Element- oder Metalloxid oder Metallhydroxid enthalten, das erhalten wurde durch eine nach der Membranbildung erfolgten Hydrolyse und/oder Sol-Gel-Reaktion und **dadurch gekennzeichnet sind, dass** die Vorstufe oder die Vorstufen des Salz, Element- oder Metalloxid oder Metallhydroxid vor dem Entzug des Lösungsmittels der polymeren Säure und der polymeren Base(n) hinzugegeben werden.

6. Nicht hydrolisierte Vorstufen aus Anspruch 5 **dadurch gekennzeichnet, dass** sie ausgewählt sind aus:
Metall/Element-Alkoxiden/Ester von Ti, Zr, Sn, Si, B, Al
Metallacetylacetonate, z. B. Ti(acac)4, Zr(acac)4
Mischverbindungen aus Metall/Element-Alkoxiden und
Metallacetylacetonaten, z. B. Ti(acac)2(OiPr)2 etc.
organischen Aminoverbindungen von Ti, Zr, Sn, Si, B, Al

7. Komposite und Kompositmembranen nach Anspruch 1, 2 und/oder 5, **dadurch gekennzeichnet, daß** sie noch zusätzlich kovalent vemetzt sind.

8. Kompositmembranen nach den Ansprüchen 5 und 7, **dadurch gekennzeichnet, daß** die Membranen mit Phosphorsäure nachbehandelt werden, um in der Membranmatrix aus den Metalloxiden und/oder -hydroxiden und/oder -oxidhydroxiden Metall- oder Elementphosphate oder -hydrogenphosphate oder -dihydrogenphosphate zu generieren, die zur Protonenleitfähigkeit beitragen.

9. Komposit oder Kompositmembran nach einem oder mehreren der Ansprüche 1 bis 8 **dadurch gekennzeichnet**, das er die Gruppierung 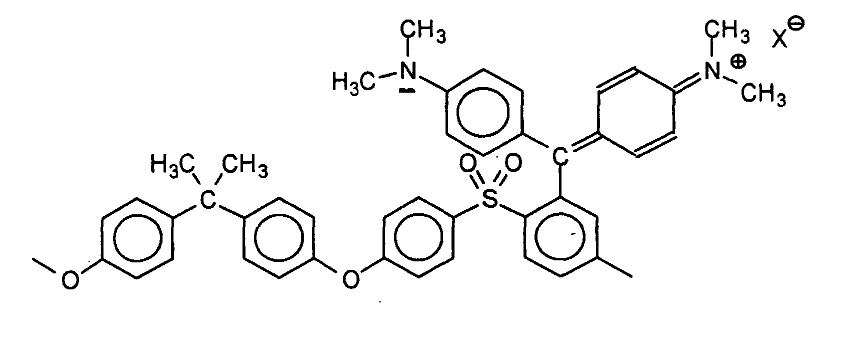 enthält.

10. Verfahren zur Herstellung von Kompositen und Kompositmembranen nach einem oder mehreren der Ansprüche 1 bis 9 **dadurch gekennzeichnet, daß** man folgende Komponenten in einem dipolar-aprotischen Lösungsmittel ausgewählt aus N-Methylpyrrolidinon (NMP), N,N-Dimethylacetamid (DMAc), N,N-Dimethylformamid (DMF), Dimethylsulfoxid (DMSO) oder Sulfolan zusammenmischt: eine polymere Säure mit -SO₃X, PO₃X₂, -COOX oder -B(OX)₂ (X=H, ein- oder zwei- oder drei- oder vierwertiges Metallkation), mindestens eine polymere Base, die primäre, sekundäre oder tertiäre Aminogruppen, Pyridingruppen, Imidazol-, Benzimidazol-, Triazol-, Benzotriazol-Pyrazol- oder Benzpyrazolgruppen entweder in der Seitenkette und/oder in der Hauptkette tragen und mindestens metall- oder elementorganische Verbindungen gemäß der Verbindungen aus Anspruch 6.

11. Verfahren nach Anspruch 10, **dadurch gekennzeichnet, daß** man aus der Polymerlösung aus Anspruch 10 dünne Filme auf einer Unterlage (Glas- oder Metallplatte, Gewebe, Vlies, poröse (Polymer)membran) zieht, das Lösungsmittel abdampft, und den gebildeten dünnen Film folgendermaßen nachbehandelt, wobei die Reihenfolge der Nachbehandlungsschritte variieren und auch ggf. die Schritte (1) und/oder (2) und/oder (3) weggelassen werden können:
(1) in Wasser bei T=50 bis 100°C
(2) in 1 bis 100%iger Mineralsäure (Halogenwasserstoffsäure, Schwefelsäure, Phosphorsäure) bei T=50 bis 100°C
(3) in 1 bis 50%iger wässriger Lauge (z. B. Ammoniaklösung, Aminlösung, Natronlauge, Kalilauge, Natriumcarbonatlösung, Calciumhydroxidlösung, Bariumhydroxidlösung) oder in einem flüssigen wasserfreien Amin oder Gemisch verschiedener flüssiger Amine
(4) in Wasser bei T=50 bis 100°C.

12. Verfahren zur Herstellung von Kompositen und Kompositmembranen **dadurch gekennzeichnet, daß** man folgende Komponenten in einem dipolar-aprotischen Lösungsmittel ausgewählt aus N-Methylpyrrolidinon (NMP), N,N-Dimethylacetamid (DMAc), N,N-Dimethylformamid (DMF), Dimethylsulfoxid (DMSO) oder Sulfolan zusammenmischt: eine polymere Säure mit -SO₃X, -PO₃X₂, -COOX oder -B(OX)₂ (X=einoder zwei- oder drei- oder vierwertiges Metallkation), mindestens eine polymere Base, die primäre, sekundäre oder tertiäre Aminogruppen, Pyridingruppen, Imidazol-, Benzimidazol-, Triazol-, Benzotriazol-, Pyrazol- oder Benzpyrazolgruppen entweder in der Seitenkette und/oder in der Hauptkette tragen und mindestens metall- oder elementorganische Verbindungen gemäß der Verbindungen aus Anspruch 6, **dadurch gekennzeichnet, daß** man aus der Polymerlösung aus Anspruch 10 dünne Filme auf einer Unterlage (Glas- oder Metallplatte, Gewebe, Vlies, poröse (Polymer)membran) zieht, das Lösungsmittel abdampft, und den gebildeten dünnen Film in Wasser bei T=50 bis 100°C nachbehandelt.

13. Verwendung der Membranen nach Anspruch 1 und/oder 2 zur Gewinnung von Energie auf elektrochemischem Weg.

14. Verwendung der Membranen nach Anspruch 1 und/oder 2 als Bestandteil von Membranbrennstoffzellen (H2- oder Direktmethanol-Brennstoffzellen) bei Temperaturen von 0 bis 180°C.

15. Verwendung der Membranen nach Anspruch 1 und/oder 2 in elektrochemischen Zellen.

16. Verwendung der Membranen nach Anspruch 1 und/oder 2 in sekundären Batterien

17. Verwendung der Membranen nach Anspruch 1 und/oder 2 in Elektrolysezellen.

18. Verwendung der Membranen nach Anspruch 1 und/oder 2 in Membrantrennprozessen wie Gastrennung, Pervaporation, Perstraktion, Umkehrosmose, Elektrodialyse, und Diffusionsdialyse.

## Claims

1. Composites and composit membranes, comprising (A) at least one polymer acid, (B) one or more polymer bases and (C1) at least nanodispers distributed element oxide and/or metal oxide and/or metal hydroxide.

2. Composites and composit membranes, comprising (A) at least one polymer acid, (B) one or more polymer bases and (C2) at least nanodispers distributed element phosphate and/or metal phosphate and/or hydrogen phosphate and/or dihydrogenphosphat.

3. Composites and composit membranes according to claim 1 and 2 **characterised in that** the polymer acid is an aryl main chain polymer and shows -SO₃H, -PO₃H₂, -COOH or -B(OH)₂ or their salts as acidic groups and is selected from the group of the polyethersulfones, Polysulfones, Polyphenylsulfones, polyetherethersulfones, polyetherketones, polyetheretherketones, polyphenyleneethers, Polydiphenylphenylenether, polyphenylenesulfide or is a copolymer which at least contains one of these components.

4. Composites and composit membranes according to claim 1 and 2 **characterised in that** the polymers bases contain primary, secondary or tertiary amino groups, pyridine groups, imidazole, benzimidazole , triazole, benzotriazole, pyrazole or benzpyrazole groups either in the side chain or in the main chain.

5. Composites and composit membranes after one or several of the claims 1-4, **characterised in that** they contain a salt, element oxide or metal oxide or metal hydroxide, that was obtained by hydrolysis after the membrane forming process has been carried out and/or sol gel reaction and are **characterised in that** the precursor(s) of the salt, element oxide or metal oxide or metal hydroxide is(are) added to the polymer acid and the polymer base(s) before the withdrawal of the solvent.

6. Non hydrolised precursors according to claim 5, **characterised in that** they are selected from:
metal/element alkoxides/estera of Ti, Zr, Sn, Si, B, Al
metal acetylacetonates, e.g. Ti(acac)4, Zr(acac)4
Mixed compounds from metal/element alkoxides and
metal acetylacetonates, e.g. Ti(acac)2(OiPr)2 etc.
organic amino compounds of Ti, Zr, Sn, Si, B, Al

7. Composites and composit membranes according to claim 1, 2 and/or 5 **characterised in that** they are in addition covalently crosslinked.

8. Composit membranes according to the claims 5 and 7, **characterised in that** the membranes being posttreated with phosphoric acid, to generate metal or element phosphates or hydrogen phosphates or dihydrogenphosphates in the membrane matrix from the metal oxides and/or metal hydroxides and/or metal oxide hydroxides, which contribute to the proton conductivity.

9. Composite or compositmembrane according to one or more of claims 1 to 8, **characterised in that** they contain the group

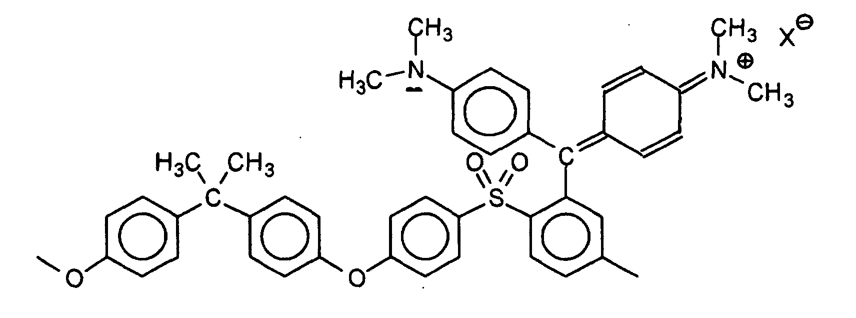

10. Method for the production of composites and composit membranes according to one or more of claims 1 to 9 **characterised in that** the following components are mixed in a dipolar aprotic solvent such as N-methylpyrrolidinone (NMP), N,N-dimethylacetamide (DMAc), N,N-dimethylformamide (DMF), dimethylsulfoxide (DMSO) or sulfolane: one polymer acid with -SO₃X, -PO₃X₂, -COOX or -B(OX)₂ (X=H, one or two or three or four valent metal cation), at least one polymer base, which contains primary, secondary or tertiary amino groups, pyridine groups, imidazole, benzimidazole, triazole, benzotriazole, pyrazole or benzpyrazole groups in the side chain and/or in the main chain, and at least metal or element organic compounds in accordance with the compounds from claim 6.

11. Method according to claim 10 **characterised in that** one draws thin films from the polymer solution acccording to claim 10 on a pad (glass or metal piece, fabric, fleece, porous (polymer) membrane), the solvent is evaporated, and posttreats the formed thin film as follows, in which vary the order of the posttreatment steps and also if necessary the steps
(1) and/or (2) and/or (3) can be left out :
(1) in water at T=50 to 100 °C
(2) in 1 to 100% mineral acid (hydro halogen acid, sulfuric acid, phosphoric acid) at T=50 to 100 °C
(3) in 1 to 50% aqueous base (e.g. ammonia solution, amine solution, soda lye, potash lye, sodium carbonate solution, calcium hydroxide solution, barium hydroxide solution) or in a liquid anhydrous amine or mixture of different liquid amines.
(4) in water at T=50 to 100 °C.

12. Method to the production of composites and composit membranes **characterised in that** the following components are mixed in a dipolar aprotic solvent such as N-methylpyrrolidinone (NMP), N,N-dimethylacetamide (DMAc), N,N-dimethylformamide (DMF), dimethylsulfoxide (DMSO) or sulfolane: one polymer acid with -SO₃X, -PO₃X₂, -COOX or -B(OX)₂ (X=H, one or two or three or four valent metal cation), at least one polymer base, which contains primary, secondary or tertiary amino groups, pyridine groups, imidazole, benzimidazole, triazole, benzotriazole, pyrazole or benzpyrazole groups in the side chain and/or in the main chain, and at least metal or element organic compounds according to claim 6, **characterised in that** one draws thin films from the polymer solution acccording to claim 9 on a pad (glass or metal piece, fabric, fleece, porous (polymer) membrane), the solvent is evaporated, and posttreats the formed thin film in water at T=50 to 100 °C.

13. Use of the membranes according to claim 1 and/or 2 for the generation of energy in an electrochemical way.

14. Use of membranes according to claim 1 and/or 2 as a constituent of membrane fuel cells (hydrogen or direct methanol fuel cells) at temperatures of 0 to 180 °C.

15. Use of membranes according to claim 1 and/or 2 in electrochemical cells.

16. Use of membranes according to claim 1 and/or 2 in secondary batteries

17. Use of membranes according to claim 1 and/or 2 in electrolysis cells.

18. Use of membranes according to claim 1 and/or 2 in membrane separation processes like gas separation, pervaporation, perstraction, reverse osmosis, electrodialysis and diffusion dialysis.

## Revendications

1. Composites et Composites de membrane, contenant (A) au moins un acide polymèrique, (B) un, ou plusieurs bases et (Cl) au moins de l'oxide d'élément et/ou de l' oxide de métal et/ou de l'hydroxide de métal nano dispersé.

2. Composites et Composites de membrane, contenant (A) au moins un acide polymèrique, (B) un, ou plusieurs bases et (Cl) au moins du phosphate et/ou de l'hydrogenophosphate et/ou du dihydrogenophosphat d'élément ou de métal nano dispersé.

3. Composites et Composites de membrane selon les revendications 1 et 2, **caractérisé en ce que** l'acide polymérique est un polymère à chaîne principale aryl et contient -SO₃H, -PO₃H₂, -COOH ou -B(OH)₂ ou ses sels comme groupement acide et est choisi du groupe des polyéthersulfone, polysulfone, polyphenylsulfone, polyétheréthersulfone, polyétherketone, polyétheréthercétone, polyphenylenéther, polydiphenylphenylenéther, polyphenylensulfide ou est un copolymère, qui contient au moins un de ses composants.

4. Composites et Composites de membrane selon les revendications 1 et 2, **caractérisé en ce que** les bases polymériques contiennent des groupes aminés primaires, secondaires ou tertiaires, des groupes pyridines, des groupes imidazoles, benzimidazoles, triazoles, benzotriazoles, pyrazoles ou benzpyrazoles soit dans la chaîne latérale ou dans la chaîne principale.

5. Composites et Composites de membrane selon une ou plusieurs des revendications 1 à 4, **caractérisées en ce qu'**ils contiennent un sel, de l'oxide d'élément ou de métal ou de l' hydroxide de métal, qui était obtenu après la formation de membrane par une hydrolyse et/ou une réaction de sol-gel et **caractérisé en ce que** le ou les précurseurs du sel, l'oxide d'élément ou de métal ou hydroxide de métal est(sont) ajouté(s) avant l'évaporation du solvent de l'acide polymérique et de la /des base(s).

6. Précurseurs non-hydrolysé selon la revendication 5 **caractérisés en ce qu'**ils sont choisi parmi:
métal/élément-alcoxide/éster de Ti, Zr, Sn, Si, B, Al
métalacetylacétonate, p.e. Ti(acac)₄, Zr(acac)₄
composé mixtes de métal/élément-alcoxides et
métalacetylacétonate, p.e. Ti(acac)₂(OiPr)₂ etc.
composés aminés organiques de Ti, Zr, Sn, Si, B, Al

7. Composites et Composites de membrane selon les revendications 1, 2 et/ou 5, **caractérisés en ce qu'**ils sont en plus ramifiés covalents.

8. Composites de membrane selon les revendications 5 et 7, **caractérisés en ce que** les membranes sont traitées après avec l'acide phosphorique, pour générer dans la matrice de membrane à partir des oxides et/ou de l'hydroxides et/ou de l'oxides hydroxides de métal des phosphates et/ou de l' hydrogenophosphates et/ou du dihydrogenophosphates d'élément ou de métal, qui contribue à la conductivité protonique.

9. Composites et Composites de membrane selon une ou plusieurs des revendications 1 à 8, **caractérisées en ce qu'**ils contiennent le group

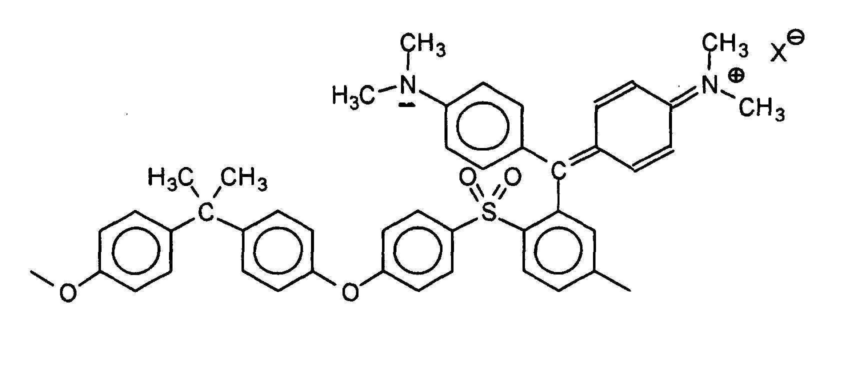

10. Procédé pour la production de composites et composites de membrane selon les revendications 1 à 9, **caractérisé en ce qu'**on mélange les composantes suivants dans un solvent dipolaire-aprotique choisi parmi N-méthylpyrrolidinone (NMP), N,N-dimethylacétamide (DMAc), N,N-diméthylformamide (DMF), diméthylsulfoxide (DMSO) ou sulfolane: un acide polymérique avec -SO₃X, -PO₃X₂, -COOX ou -B(OX)₂ (X=H, cation métallique de valence un, deux, trois ou quatre), au moins une base polymérique, qui contient des groupes aminés primaires, secondaires ou tertiaires, des groupes pyridines, des groupes imidazole, benzimidazole, triazole, benzotriazole, pyrazole ou benzpyrazole soit dans la chaîne latérale et/ou dans la chaîne principale et au moins des composés organométalliques ou organo élémentaires selon les composés de la revendication 6.

11. Procédé selon la revendication 10, **caractérisé en ce qu'**on fait à partir de la solution de polymère de la revendication 10 des films minces sur un support (plaque vitré ou métallique, tissue, vlies, membrane (polymérique) poreu), évaporise le solvent, et qu'on traite après le film mince formé de la manière suivante, encore que l'ordre des étapes de après-traitement peut varier et aussi le cas écheant les étapes (1) et/ou (2) et/ou (3) peuvent être annulés:
(1) dans l'eau de T=50 à 100°C
(2) dans l'acide minérale de 1 à 100% (acide minérale halogène, acide sulfurique, acide phosphorique) de T=50 à 100°C
(3) dans une base aqueuse (par ex. solution ammoniacale, solution d'amine, soude, potasse, solution de carbonate de sodium, solution d'hydroxide de calcium, solution d'hydroxide de baryum) ou dans un amine liquide exempte d'eau ou dans un mélange de différents amines liquides.
(4) dans l'eau de T=50 à 100°C.

12. Procédé pour la production de composites et composites de membrane **caractérisé en ce qu'**on mélange les composantes suivants dans un solvent dipolaire-aprotique choisi parmi N-méthylpyrrolidinone (NMP), N,N-diméthylacetamide (DMAc), N,N-diméthylformamide (DMF), diméthylsulfoxide (DMSO) ou sulfolane: un acide polymérique avec -SO₃X, -PO₃X₂, -COOX ou -B(OX)₂ (X= cation métallique de valence un, deux, trois ou quatre), au moins une base polymérique, qui contient des groupes aminés primaires, secondaires ou tertiaires, des groupes pyridines, des groupes imidazole, benzimidazole, triazole, benzotriazole, pyrazole ou benzpyrazole soit dans la chaîne latérale et/ou dans la chaîne principale et au moins des composés organométallique ou organo élémentaire selon les composés de la revendication 6, **caractérisé en ce qu'**on fait des films minces sur un support (plaque vitré ou métallique, tissue, vlies, membrane (polymérique) poreux), qu'on évaporise le solvent, et qu'on traite après le film mince formé dans l'eau de T=50 à 100°C.

13. Utilisation des membranes selon la revendication 1 et/ou 2 pour gain d'énergie par voie électrochimique.

14. Utilisation des membranes selon la revendication 1 et/ou 2 comme composante des piles à combustibles à membrane (hydrogène ou piles à combustible direct méthanol) à des températures de 0 à 180 °C.

15. Utilisation des membranes selon la revendication 1 et/ou 2 dans des cellules électrochimiques.

16. Utilisation des membranes selon la revendication 1 et/ou 2dans des piles sécondaires.

17. Utilisation des membranes selon la revendication 1 et/ou 2 dans des cellules d'électrolyse.

18. Utilisation des membranes selon la revendication 1 et/ou 2 dans des procédé de séparation par membrane comme séparation de gas, pervaporation, perstraktion, osmose inverse, électrodialyse, et dialyse de diffusion.
